# EUROPEAN PATENT APPLICATION

(11) **EP 4 641 824 A1**
(43) Date of publication of application: **29.10.2025**
(21) Application number: 23906917.2
(22) Date of filing: 15.12.2023
(51) Int. Cl.: H01M 50/595, H01M 50/107, H01M 50/531, H01M 50/586

(54) **CYLINDRICAL BATTERY**

(30) Priority: 22.12.2022 JP 2022205774
(71) Applicant: Panasonic Energy Co., Ltd., Osaka 570-8511 (JP)
(72) Inventor: HAYASHI, Daiki, Kadoma-shi Osaka 571-0057 (JP)
(74) Representative: Eisenführ Speiser
(86) International application number: PCT/JP2023/045014
(87) International publication number: WO 2024/135555

(57) **Abstract**

A cylindrical battery that is one example of an embodiment comprises: an electrode body (14) that includes a positive electrode lead (20) and a negative electrode lead (21); and a bottomed cylindrical outer can (16) that accommodates the electrode body (14). The cylindrical battery has a structure in which a portion (21a) where the negative electrode lead (21) is welded to the can bottom inner surface of the outer can (16) is formed at a section of the negative electrode lead (21) separate from the leading end thereof. The cylindrical battery that is one example of an embodiment further comprises an insulation tape (50) that is affixed to at least the upper surface of the leading end portion of the negative electrode lead (21) facing toward the electrode body (14).

## Description

### TECHNICAL FIELD

The present disclosure relates to a cylindrical battery.

### BACKGROUND ART

A cylindrical battery comprises a wound-type electrode assembly, a bottomed cylindrical exterior housing can that houses the electrode assembly, and a sealing assembly with which an opening portion of the exterior housing can is capped. The electrode assembly generally has a positive electrode lead connected to a positive electrode, and a negative electrode lead connected to a negative electrode. In the cylindrical battery, one of the leads is connected to the exterior housing can, so that the exterior housing can serves as an external terminal of the positive electrode or the negative electrode. For example, Patent Literature 1 discloses a cylindrical battery that comprises a negative electrode lead welded to an inner surface of a can bottom of the exterior housing can, and a lower insulating plate arranged between the electrode assembly and the can bottom. The lower insulating plate has a function of preventing a short circuit caused by contact between the negative electrode lead and the positive electrode.

### CITATION LIST

### PATENT LITERATURE

PATENT LITERATURE 1: Japanese Unexamined Patent Application Publication No. 2015-156307

### SUMMARY

In the cylindrical battery of PATENT LITERATURE 1, a tip portion of the lead is not welded to the can bottom. Therefore, the tip portion of the lead moves due to impact, vibration, or the like applied to the battery, which may cause contact with the positive electrode, leading to a short circuit.

A cylindrical battery according to the present disclosure comprises an electrode assembly including an electrode lead, and a bottomed cylindrical exterior housing can that houses the electrode assembly, a joining portion with an inner surface of a can bottom of the exterior housing can being formed in a portion away from a tip of the electrode lead, the cylindrical battery further comprising an insulating tape on a side closer to the tip than the joining portion of the electrode lead, the insulating tape being attached to at least a first lead surface facing a side of the electrode assembly.

According to the cylindrical battery of the present disclosure, it is possible to effectively reduce the occurrence of a short circuit caused by contact between the lead connected to the inner surface of the can bottom and a counter electrode of the electrode assembly. That is, even when the tip portion of the lead moves due to large impact, vibration, or the like applied to the battery, it is possible to reduce the risk for a short circuit caused by contact with the counter electrode.

### BRIEF DESCRIPTION OF DRAWING

FIG. 1 is a sectional view of a cylindrical battery of an example of embodiments.
FIG. 2 is an enlarged view of a portion A in FIG. 1.
FIG. 3 is an enlarged plan view illustrating a tip portion of a negative electrode lead attached with an insulating tape.
FIG. 4 is a diagram illustrating a modified example of the insulating tape.

### DESCRIPTION OF EMBODIMENTS

Hereinafter, an example of embodiments of a cylindrical battery according to the present disclosure will be described in detail with reference to the drawings. It should be noted, however, that the cylindrical battery according to the present disclosure is not limited to the embodiments described below.

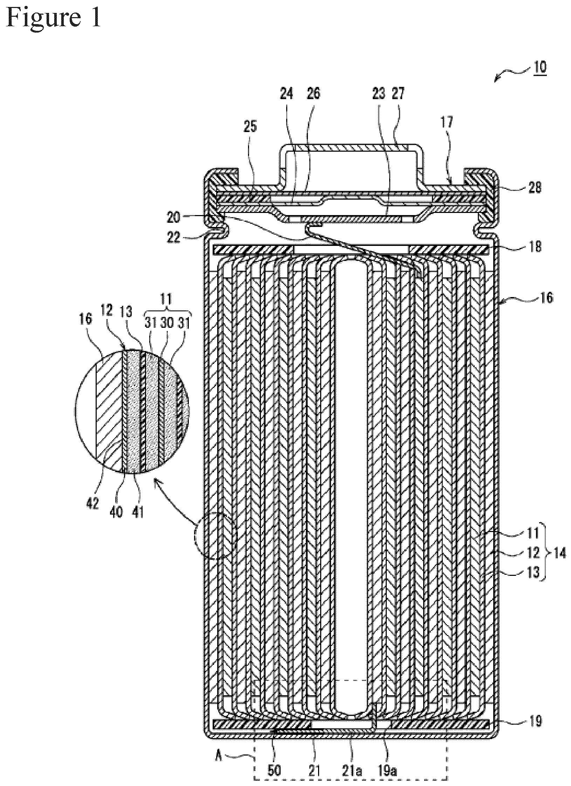

FIG. 1 is a sectional view of a cylindrical battery 10 of an example of embodiments. As illustrated in FIG. 1, the cylindrical battery 10 comprises an electrode assembly 14 including an electrode lead, and a bottomed cylindrical exterior housing can 16 that houses the electrode assembly 14. The cylindrical battery 10 further comprises a sealing assembly 17 with which an opening portion of the exterior housing can 16 is capped. The electrode assembly 14 is housed together with an electrolyte in the exterior housing can 16. The exterior housing can 16 has a grooved portion 22 formed in a side wall, and the sealing assembly 17 is supported on the grooved portion 22 so that the opening portion of the exterior housing can 16 is capped therewith. Hereinafter, for convenience of description, the sealing assembly 17 side of the cylindrical battery 10 will be described as "the upper side", and the bottom side of the exterior housing can 16 will be described as "the lower side".

Although the details will be described later, the electrode assembly 14 has, as the electrode lead, a positive electrode lead 20 and a negative electrode lead 21. In the present embodiment, the negative electrode lead 21 is joined to the inner surface of the can bottom of the exterior housing can 16 by welding, and a welded portion 21a with the inner surface of the can bottom is formed in a portion away from a tip of the negative electrode lead 21. That is, a portion located closer to the tip side than the welded portion 21a of the negative electrode lead 21 is not joined to the inner surface of the can bottom, so that it may move due to impact, vibration, or the like applied to the cylindrical battery 10. Therefore, the cylindrical battery 10 comprises an insulating tape 50 on a side closer to the tip than the welded portion 21a of the negative electrode lead 21, the insulating tape 50 being attached to at least a first lead surface facing a side of the electrode assembly 14.

For the electrolyte, an aqueous electrolyte may be used, but in the present embodiment, a non-aqueous electrolyte is used. The non-aqueous electrolyte has lithium-ion conductivity. The non-aqueous electrolyte may be a liquid-state electrolyte (electrolyte liquid) or a solid electrolyte.

The liquid-state electrolyte (electrolyte liquid) includes a non-aqueous solvent and an electrolyte salt dissolved in the non-aqueous solvent. For the non-aqueous solvent, esters, ethers, nitriles, amides, mixed solvents containing two or more selected from the foregoing, and the like may be used, for example. Examples of the non-aqueous solvent include ethylene carbonate (EC), ethyl methyl carbonate (EMC), dimethyl carbonate (DMC), diethyl carbonate (DEC), and a mixed solvent of the foregoing solvents. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used, for example.

As the solid electrolyte, a solid-state or gel-state polymer electrolyte, an inorganic solid electrolyte, and the like can be used, for example. As the inorganic solid electrolyte, a material (for example, an oxide-based solid electrolyte, a sulfide-based solid electrolyte, and a halide-based solid electrolyte) known in an all-solid-state lithium ion secondary battery or the like can be used. The polymer electrolyte includes, for example, a lithium salt and a matrix polymer, or alternatively, a non-aqueous solvent, a lithium salt, and a matrix polymer, for example. As the matrix polymer, for example, a polymer material which absorbs the non-aqueous solvent to be gelled is used. Examples of the polymer material include fluororesin, acrylic resin, and polyether resin.

The electrode assembly 14 has a positive electrode 11, a negative electrode 12, and a separator 13, and has a wound structure in which the positive electrode 11 and the negative electrode 12 are spirally wound with the separator 13 interposed therebetween. The positive electrode 11, the negative electrode 12, and the separator 13 are band-shaped elongated bodies, and are spirally wound to be alternately stacked in a radial direction of the electrode assembly 14. The negative electrode 12 is formed to be one size larger than the positive electrode 11 in order to prevent precipitation of lithium. That is, the negative electrode 12 is formed to be longer in the longitudinal direction and the width direction than the positive electrode 11. The two separators 13 are each formed to be at least one size larger than the positive electrode 11, and are arranged so as to interpose, for example, the positive electrode 11 therebetween.

The electrode assembly 14 has the positive electrode lead 20 joined to the positive electrode 11, and the negative electrode lead 21 joined to the negative electrode 12, as described above. In the present embodiment, the positive electrode lead 20 is provided at a position away from a winding start-side end and a winding finish-side end of the electrode assembly 14 in a center portion of the positive electrode 11 in its longitudinal direction. On the other hand, the negative electrode lead 21 is provided at one end portion of the negative electrode 12 in its longitudinal direction, the one end portion being located on the winding start side of the electrode assembly 14. Note that the electrode lead may be arranged at any position, and for example, the negative electrode lead 21 may be provided at the winding finish-side end portion of the electrode assembly 14.

The positive electrode 11 has a positive electrode core 30, and a positive electrode mixture layer 31 formed on at least one surface of the core. For the positive electrode core 30, a foil of metal such as aluminum or an aluminum alloy, which is stable within a potential range of the positive electrode 11, a film in which such a metal is arranged on a surface layer thereof, or the like can be used. The positive electrode mixture layer 31 includes a positive electrode active material, a conductive agent such as acetylene black, and a binder such as polyvinylidene fluoride (PVdF), and is preferably formed on each surface of the positive electrode core 30. For the positive electrode active material, a lithium transition metal composite oxide containing, for example, Ni, Co, Mn, and Al is used. Note that the positive electrode lead 20 is preferably joined directly to the positive electrode core 30 by ultrasonic welding or the like.

The negative electrode 12 has a negative electrode core 40, and a negative electrode mixture layer 41 formed on at least one surface of the core. For the negative electrode core 40, a foil of metal such as copper or a copper alloy, which is stable within a potential range of the negative electrode 12, a film in which such a metal is arranged on a surface layer thereof, or the like can be used. The negative electrode mixture layer 41 includes a negative electrode active material, and a binder such as styrene-butadiene rubber (SBR), and is preferably formed on each surface of the negative electrode core 40. For the negative electrode active material, graphite, a material containing Si, or the like is used, for example. The negative electrode lead 21 is preferably joined directly to the negative electrode core 40 by ultrasonic welding or the like. Note that the negative electrode core 40 is caused to contact the inner surface of the exterior housing can 16 so that the negative electrode 12 and the exterior housing can 16 can be electrically connected to each other.

The cylindrical battery 10 comprises an upper insulating plate 18 that is arranged between the sealing assembly 17 and an electrode group and has an opening portion through which the positive electrode lead 20 passes. In this specification, the electrode group means a portion constituted by the positive electrode 11, the negative electrode 12, and the separator 13 in the electrode assembly 14 and except the positive electrode lead 20 and the negative electrode lead 21. The cylindrical battery 10 further comprises a lower insulating plate 19 that is arranged between the inner surface of the can bottom of the exterior housing can 16 and the electrode group and has an opening portion 19a through which the negative electrode lead 21 passes.

In the example illustrated in FIG. 1, the positive electrode lead 20 extends toward the sealing assembly 17 side through the opening portion in the upper insulating plate 18, and the negative electrode lead 21 extends toward the can bottom side of the exterior housing can 16 through the opening portion 19a in the lower insulating plate 19. The positive electrode lead 20 is connected to a lower surface of a bottom plate 23 of the sealing assembly 17 by welding or the like, so that the sealing assembly 17 serves as a positive electrode terminal. The negative electrode lead 21 is connected to the inner surface of the can bottom of the exterior housing can 16 by welding or the like, so that the exterior housing can 16 serves as a negative electrode terminal.

In an outermost peripheral surface of the electrode assembly 14, the negative electrode 12 is arranged and a core exposed portion 42 is provided which is formed by exposing a surface of the negative electrode core 40. The core exposed portion 42 is in contact with an inner peripheral surface of the exterior housing can 16. When the core exposed portion 42 is in contact with the inner peripheral surface of the exterior housing can 16 serving as the negative electrode terminal, both end portions of the negative electrode 12 in its longitudinal direction and the negative electrode terminal are electrically connected to each other, which makes it possible to ensure good current collecting performance. The core exposed portion 42 may be provided in only a part of the outermost peripheral surface of the electrode assembly 14, but is preferably provided in the entire area of the outermost peripheral surface. For example, a portion in which the negative electrode mixture layer 41 is not formed is provided with a length of one lap or more of the electrode assembly 14 from the winding finish end of the negative electrode 12 on each surface of the negative electrode core 40.

The exterior housing can 16 is a bottomed cylindrical metallic container. A gasket 28 is provided between the exterior housing can 16 and the sealing assembly 17 to seal the inside of the battery. The exterior housing can 16 has the grooved portion 22 which is formed by, for example, pressing a side surface portion from the outside, and which supports the sealing assembly 17. The grooved portion 22 is preferably formed in an annular shape along the circumferential direction of the exterior housing can 16, and supports the sealing assembly 17 on its upper surface. Furthermore, an upper end portion of the exterior housing can 16 is bent inward and crimped to a peripheral edge portion of the sealing assembly 17.

The sealing assembly 17 has a structure in which the bottom plate 23, a lower vent member 24, an insulating member 25, an upper vent member 26, and a cap 27 are stacked in order from the electrode assembly 14 side. Each of the members constituting the sealing assembly 17 has, for example, a disk shape or a ring shape, and the members except the insulating member 25 are electrically connected to one another. The lower vent member 24 and the upper vent member 26 are connected to each other at their center portions, and the insulating member 25 is interposed between peripheral edge portions of the lower vent member 24 and the upper vent member 26. If the internal pressure of the battery increases, the lower vent member 24 is deformed and ruptured in a manner such that the upper vent member 26 is pushed up toward the cap 27 side, resulting in cutting off of a current path between the lower vent member 24 and the upper vent member 26. If the internal pressure further increases, the upper vent member 26 breaks, and gas is discharged through an opening portion in the cap 27.

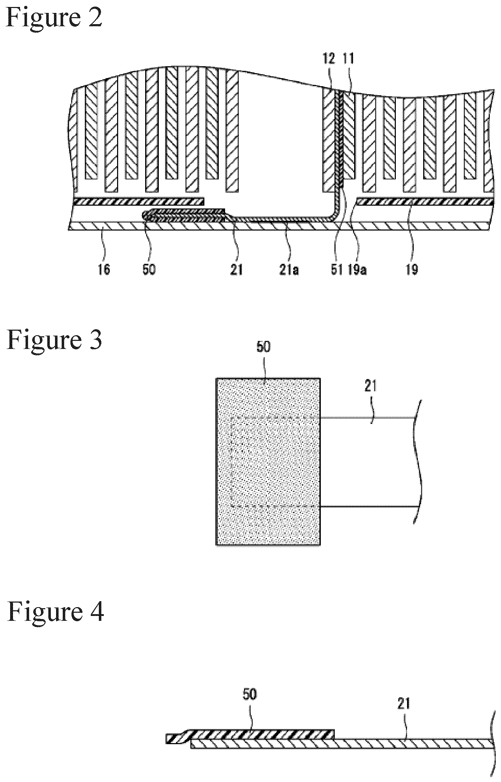

Hereinafter, the negative electrode lead 21 and the insulating tape 50 attached to the tip portion of the negative electrode lead 21 will be described in detail with reference to FIGS. 2 and 3. FIG. 2 is an enlarged view of a portion A in FIG. 1 (the separator 13 is not illustrated). FIG. 3 is an enlarged plan view illustrating the tip portion of the negative electrode lead 21 attached with the insulating tape 50.

As illustrated in FIGS. 2 and 3, the insulating tape 50 is attached to at least a first lead surface facing a side of the electrode assembly 14 on a side closer to the tip than the welded portion 21a of the negative electrode lead 21. Hereinafter, the first lead surface facing the electrode assembly 14 side is referred to as an "upper surface", and a second lead surface on an opposite side of the upper surface is referred to as an "lower surface". The insulating tape 50 preferably covers the entire upper surface of the negative electrode lead 21 in a predetermined length range from the tip of the negative electrode lead 21. In this case, even when the tip portion of the negative electrode lead 21 that is not joined to the exterior housing can 16 moves due to impact, vibration, or the like applied to the cylindrical battery 10, it is possible to reduce the risk for a short circuit caused by contact between the negative electrode lead 21 and the positive electrode 11.

As described above, the negative electrode lead 21 extends from a portion located on the winding start side of the electrode assembly 14 in the negative electrode 12 to the can bottom side, and is welded to the inner surface of the can bottom. The lower insulating plate 19 is arranged between the electrode group of the electrode assembly 14 and the can bottom, but the opening portion 19a is formed in the lower insulating plate 19, thereby enabling the negative electrode lead 21 to extend to the can bottom side through the opening portion 19a. The opening portion 19a is, for example, an exactly circular through hole formed in a radially central portion of the cylindrical battery 10, and is arranged below a winding core of the electrode assembly 14 and a portion in which the negative electrode lead 21 extends from the negative electrode 12. In the winding core, a cavity along the axial direction of the electrode assembly 14 is formed.

Note that the lower insulating plate 19 is interposed between the negative electrode lead 21 and the electrode group, thereby preventing contact between the negative electrode lead 21 and the positive electrode 11, but the opening portion 19a is present in the lower insulating plate 19, so that the negative electrode lead 21 and the positive electrode 11 may face each other in the up-down direction via the opening portion 19a. Such a state is likely to occur at the tip portion of the negative electrode lead 21, and thus, the tip portion of the negative electrode lead 21 is preferably covered with the insulating tape 50.

The negative electrode lead 21 is a strip-shaped conductive thin plate, and is formed of a metal mainly made of nickel, for example. A width of the negative electrode lead 21 is not limited to a particular width, but is greater than or equal to 2 mm and less than or equal to 4 mm, as an example. A thickness of the negative electrode lead 21 is also not limited to a particular thickness, but is greater than or equal to 50 µm and less than or equal to 150 µm, as an example. In the present embodiment, one negative electrode lead 21 is provided, but a plurality of negative electrode leads 21 may be provided. In a case where a plurality of negative electrode leads 21 are provided, the tip portion of each of the negative electrode leads 21 may be preferably attached with the insulating tape 50. Note that a portion which is arranged on the negative electrode core 40 of the negative electrode lead 21 is attached with the insulating tape 51.

The negative electrode lead 21 extends across a range of the winding core of the electrode assembly 14, and the tip portion thereof is arranged below the positive electrode 11 via the lower insulating plate 19. The negative electrode lead 21 is arranged to extend along the inner surface of the can bottom from the negative electrode 12 in the vicinity of the winding core, and passes under the winding core to extend to the underneath of the positive electrode 11. If a length of the portion of the negative electrode lead 21 extending from the negative electrode 12 is too short, it is difficult to weld the negative electrode lead 21, and thus, the negative electrode lead 21 preferably has a length sufficient to at least extend across the range of the winding core.

The negative electrode lead 21 is joined to the inner surface of the can bottom by resistance welding, for example. Therefore, an electrode for welding is inserted from above the winding core to perform welding, so that the welded portion 21a is formed below the winding core. In a predetermined length range from the tip of the negative electrode lead 21, the negative electrode lead 21 is not joined to the inner surface of the can bottom. The predetermined length is, for example, greater than or equal to 5 mm and less than or equal to 30 mm.

The insulating tape 50 includes, for example, a tape substrate, and an adhesive layer formed on one side of the substrate, and is attached to the surface of the negative electrode lead 21 via the adhesive layer. Examples of the resin constituting the tape substrate include polyester such as polyethylene terephthalate (PET), polypropylene (PP), polyimide (PI), polyphenylene sulfide (PPS), polyetherimide (PEI), and polyamide. The thickness of the tape substrate is, for example, greater than or equal to 10 µm and less than or equal to 30 µm. The adhesive constituting the adhesive layer is preferably an adhesive exerting an adhesive capacity at a room temperature. Examples of the adhesive include an acrylic adhesive, and a synthetic-rubber adhesive. Note that the insulating tape 50 may contain an insulating inorganic filler.

In the upper surface of the negative electrode lead 21, the insulating tape 50 may cover the substantially entire area of the range from the tip of the lead to the welded portion 21a. Since a portion facing the positive electrode 11 via the opening portion 19a may be present in the negative electrode lead 21, a wide range closer to the tip side than the welded portion 21a is preferably covered with the insulating tape 50. The insulating tape 50 preferably covers at least 50% of a range from the tip to the welded portion 21a of the negative electrode lead 21, and may cover a range of greater than or equal to 70%.

The insulating tape 50 protrudes from the upper surface of the negative electrode lead 21, and covers an end surface of the negative electrode lead 21 along its thickness direction. This makes it possible to further reduce the risk for a short circuit caused by contact between the negative electrode lead 21 and the positive electrode 11. The insulating tape 50 preferably covers the end surface of the tip to be beyond the tip of the negative electrode lead 21. The insulating tape 50 may protrude toward only one side of the negative electrode lead 21 in its width direction, but preferably protrudes from both ends of the negative electrode lead 21 in its width direction to cover end surfaces of the negative electrode lead 21 on both sides in its width direction.

In the example illustrated in FIG. 3, the insulating tape 50 protrudes in three directions from the upper surface of the lead in plan view of the negative electrode lead 21. The insulating tape 50 protrudes toward both sides of the negative electrode lead 21 in its width direction with the same width. The width of a portion protruding from the upper surface of the lead toward both sides in the width direction of the lead may be, for example, smaller than the width of the negative electrode lead 21, and may be greater than or equal to 1 mm and less than or equal to 3 mm.

The insulating tape 50 is also attached to the lower surface of the negative electrode lead 21. This makes it possible to further reduce the risk for a short circuit caused by contact between the negative electrode lead 21 and the positive electrode 11. The two insulating tapes 50 may be used so that one insulating tape 50 is attached to each of the upper surface and the lower surface of the negative electrode lead 21, but in the present embodiment, one folded-back insulating tape 50 covers both surfaces of the negative electrode lead 21. That is, the insulating tape 50 is constituted by one folded-back tape. This makes it difficult to separate the insulating tape 50. Portions of the insulating tape 50 protruding from the surfaces of the negative electrode lead 21 are preferably attached to each other.

The insulating tape 50 is arranged to sandwich the tip portion of the negative electrode lead 21 from both sides in the thickness direction of the negative electrode lead 21. The insulating tape 50 may be folded back at portions protruding from both ends of the negative electrode lead 21 in its width direction, but in the present embodiment, the insulating tape 50 is folded back at a portion protruding from the tip portion of the negative electrode lead 21. Facing positions of end portions of the folded-back insulating tape 50 are not necessarily aligned to each other, but are preferably aligned to each other from the viewpoint of the peeling resistance. The insulating tape 50 covers the upper surface and the lower surface of the negative electrode lead 21 with the same area, for example.

As illustrated in FIG. 4, the insulating tape 50 may be attached to only the upper surface of the negative electrode lead 21, or alternatively, may be attached to only the upper surface and the end surfaces of the negative electrode lead 21. That is, the insulating tape 50 is not attached to the lower surface of the negative electrode lead 21, so that the lower surface contacts the inner surface of the can bottom. Also in this case, the insulating tape 50 is preferably arranged in a state of protruding from three sides: the tip of the upper surface of the negative electrode lead 21 and both ends of the negative electrode lead 21 in its width direction. A portion of the insulating tape 50 protruding from the upper surface of the negative electrode lead 21 may be attached to the inner surface of the can bottom.

As described above, according to the cylindrical battery 10 having the above-described configuration, it is possible to effectively reduce occurrence of a short circuit caused by contact between the negative electrode lead 21 connected to the inner surface of the can bottom and the positive electrode 11 of the electrode assembly 14. That is, even when the tip of the negative electrode lead 21 moves due to large impact, vibration, or the like applied to the cylindrical battery 10, it is possible to reduce the risk for a short circuit caused by contact with the positive electrode 11.

Note that a design of the above-described embodiment may be appropriately changed without impairing the object of the present disclosure. For example, in the above-described embodiment, the lower insulating plate 19 is arranged between the electrode group and the negative electrode lead 21, but the lower insulating plate 19 may be omitted. The insulating tape 50 is attached to a range facing the positive electrode 11 on the side closer to the tip than the welded portion 21a of the negative electrode lead 21, thereby making it possible to sufficiently reduce the risk for a short circuit even when the lower insulating plate 19 is not present.

In the above-described embodiment, An adhesive tape including the tape substrate and the adhesive layer is used as the insulating tape 50, but the insulating tape 50 may be constituted by only the tape substrate. In this case, the insulating tape 50 may be attached to the negative electrode lead 21 by ultrasonic welding.

### REFERENCE SIGNS LIST

10 Cylindrical battery, 11 Positive electrode, 12 Negative electrode, 13 Separator, 14 Electrode assembly, 16 Exterior housing can, 17 Sealing assembly, 18 Upper insulating plate, 19 Lower insulating plate, 19a Opening portion, 20 Positive electrode lead, 21 Negative electrode lead, 21a Welded portion, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 42 Core exposed portion, 40 Negative electrode core, 41 Negative electrode mixture layer, 50, 51 Insulating tape

## Claims

1. A cylindrical battery, comprising: an electrode assembly including an electrode lead; and a bottomed cylindrical exterior housing can that houses the electrode assembly, a joining portion with an inner surface of a can bottom of the exterior housing can being formed in a portion away from a tip of the electrode lead, the cylindrical battery further comprising
an insulating tape on a side closer to the tip than the joining portion of the electrode lead, the insulating tape being attached to at least a first lead surface facing a side of the electrode assembly.

2. The cylindrical battery according to claim 1, wherein
the insulating tape protrudes from the first lead surface and covers an end surface of the electrode lead along a thickness direction of the electrode lead.

3. The cylindrical battery according to claim 2, wherein
the insulating tape is also attached to a second lead surface on an opposite side of the first lead surface.

4. The cylindrical battery according to claim 3, wherein
the insulating tape is constituted by one folded-back tape.
